# EUROPEAN PATENT SPECIFICATION

(11) **EP 2 650 244 B1**
(45) Date of publication and mention of the grant of the patent: **18.02.2015**
(21) Application number: 13163471.9
(22) Date of filing: 12.04.2013
(51) Int. Cl.: B65H 35/00, B29L 31/50, A43D 43/06, A43B 7/12, B29C 65/08, B29C 65/10, B29C 65/50, B29C 65/62, B29C 65/72, B29C 65/00, B29C 65/04, A43D 999/00, A43D 95/00

(54) **Taping machine and corresponding taping method for articles even of a complex shape**
Abklebemaschine und zugehöriges Abklebeverfahren für Artikel sogar mit einer komplexen Form
Machine d'enrubannage et procédé d'enrubannage correspondant pour articles y compris d'une forme complexe

(30) Priority: 13.04.2012 IT MI20120611
(43) Date of publication of application: 16.10.2013
(73) Proprietor: MACPI S.p.A. PRESSING DIVISION, 25036 Palazzolo Sull'Oglio (Brescia) (IT)
(72) Inventor: Cartabbia, Giovanni, 24067 Sarnico (BG) (IT)
(74) Representative: Petraz, Gilberto Luigi

(56) References cited:
- GB-A- 2 305 391
- US-A1- 2011 083 803

## Description

### FIELD OF THE INVENTION

The present invention concerns a machine for taping, with an adhesive, fabrics, non-woven fabrics, panels or in general layers of any natural or artificial material whatsoever, in order to reciprocally join together at least two edges.

In particular, the machine is configured to apply, continuously and semiautomatically, along a join line between two pre-assembled edges, a tape that is welded by means of adhesive. The machine according to the present invention allows to obtain articles having complex shapes, concave and/or partly closed, such as for example gloves, shoes, bra cups, handbags, suitcases, helmets, hats or suchlike.

### BACKGROUND OF THE INVENTION

Techniques are known for joining edges of layers by welding with adhesive, along a join line previously made for example by stitching, ultrasound, highfrequency or other type.

The welding can be done open, that is, between edges lying on a horizontal plane that are made to coincide, or closed, that is, between opposite edges folded over and overlapping, to define concave and/or substantially closed conformations.

The welding of two edges is normally carried out by a machine provided with a welding unit to which the edges to be joined are fed in a determinate direction.

At the same time as the edges to be joined are fed, and in correspondence with the join, an adhesive tape is applied, normally with a thermoplastic polymers base, which provides to reciprocally connect them.

The welding of the edges in closed zones that are difficult to access is normally done by manual means, such as irons or ironing presses provided with cantilevered shapes, so that the articles to be obtained can be inserted therein and their shape conferred.

It is necessary to proceed in this way because, in order to perform the continuous welding, no solution has yet been found that allows to obtain a good performance of the processes that prevent problems connected to the continuity of the welding operation, the workability of the articles and the safety of the operators.

For example, a machine is known for taping layers of material that comprises a first upper motorized roll associated to the machine body, and a second motorized or idle roll, disposed below the first roll.

The first motorized roll is associated with movement means that allow it to move toward or away from the second roll, to press it under pressure against the second roll.

The pre-assembled edges are made to pass between the first roll and the second roll, and also the adhesive tape that is fed continuously and positioned in correspondence with the join zone.

The second roll is mounted on a fixed support arm that extends substantially orthogonal with respect to the plane on which the edges are fed.

With this known machine it is possible to tape articles having substantially flat geometries, or with a tubular shape, in any case easily connectable given the simplicity of their conformation and their accessibility.

One disadvantage of these known machines is that it is not possible to tape pre-assembled edges with concave and/or partly closed geometries, since their movement interferes against the support arm of the second roll.

To this must be added the fact that, if characteristics of impermeability or sealing are required in the join zones, the taping operations must be carried out substantially continuously, without interruptions in time or variations in the speed of feed of the edges, otherwise the quality of the connection is poor and the characteristic of impermeability is lost.

Document GB 2.305.391 A discloses a method and an apparatus for taping stitches of articles with a complex and not flat shape, such as for example footwear, for example of the impermeable or transpirant type. The apparatus described in this document provides a sealing roll with a concave surface and a counter-roll to support the article with the convex shape. The supporting counter-roll is mounted on a first pivoting support arm, rigidly connected to an oscillating arm disposed substantially vertical and parallel to the structure of the machine.

Inside the pivoting arm a kinematic chain extends, which makes the supporting counter-roll rotate with respect to its own axis.

The oscillating arm is associated with a hydraulic cylinder which allows it to be positioned in two positions, angled with respect to each other by about 90°, thus allowing a corresponding oscillation of the pivoting arm, and hence of the supporting counter-roll along a horizontal axis passing substantially through the counter-roll itself. In this way, the supporting counter-roll can assume two positions, angled with respect to each other by about 90°, without losing contact with the article on which the sealing tape is applied.

This apparatus has the disadvantage that it allows a substantially univocal positioning in two extreme positions without being able to perform a continuous movement. Therefore, in the case of articles with a complicated shape, such as for example gloves, or linings for complex articles, the apparatus described in GB'391 is ineffective.

The movement of the arm and counter-roll shown in GB'391 does not allow to vary the peripheral speed in relation to the travel to be made, and even less does it allow any memorization of the movement for purposes of self-learning, with the aim of combining particular movements with specific articles worked repetitively.

It should also be noted that GB'391 makes no reference to the presence of heating means associated with the sealing roll.

One purpose of the present invention is to obtain a machine for taping edges of layers of material that allows to obtain articles having even very complex shapes, with concave conformations, substantially closed and difficult for parts of the taping machine to access when known techniques are used.

Another purpose of the present invention is to perfect a machine for taping edges that allows to obtain a high-quality join zone both of the mechanical hold and also of impermeability.

Another purpose of the present invention is to obtain a machine for taping articles that allows to perform joins, in rapid time, to obtain articles having complex shapes, for example gloves, reinforcements, linings for hats, etc., difficult for parts of the taping machine to access when known techniques are used.

Another purpose of the present invention is to obtain a machine that is simple and economical, and easy to manage by the operator.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a machine for taping articles is used to achieve the definitive join of edges of layers of material such as fabrics, non-woven fabrics, panels or other similar or comparable products made of natural or artificial material, already previously and temporarily joined along a join line, for example using ultrasound techniques, needles or other types.

With the machine according to the present invention it is possible to obtain articles of clothing, articles or objects in general, having complex shapes, concave and/or partly closed, such as for example gloves, shoes, bra cups, handbags, suitcases, helmets, hats or suchlike.

The machine according to the present invention comprises at least a taping unit suitable to apply a tape in correspondence with the join line between the edges to obtain a definitive join of the latter, and at least a movement unit suitable to determine the feed of the edges during taping. The movement unit comprises a first and a second roll having respectively a first axis of rotation and a second axis of rotation substantially parallel to the first axis of rotation. The first roll and the second roll define during use a gap for the passage of the edges. In particular, the first and the second roll are pressed toward each other to exert, on the tape that is applied, in correspondence with the join line, a desired pressure which allows the tape to adhere to the edges.

The first roll, and possibly the second roll, are associated, or in some way cooperate, with heating means that allow to heat the adhesive mean used for the application of the tape.

According to one feature of the present invention, the second roll is mounted on a support element that is configured to rotate around an axis of rotation that substantially coincides with the second axis of rotation, in which the support element is associated with an electric motor mean that allows a substantially continuous rotation thereof at a variable speed.

In this way, during the taping operations the support element can be made to rotate around the second axis of rotation according to any angle and can stop in any position whatsoever, to satisfy particular operating requirements determined by difficult access in the object being worked, and by any obstacle imposed by the support element of the second roll.

Furthermore, the movement at variable speed allows to adapt the movement of the second roll to the curve of the path to be followed, internal or external, concave or convex, depending on the particular geometry and shape of the article being worked.

In one form of embodiment, the support element has an oblong shape and has one end configured to support the second roll. In particular, the support element with an oblong shape can be inserted in the concave portions of the article being worked and, rotating around the axis of rotation of the second roll, allows to keep the latter always in the same position, that is, pressed against the edges and against the first roll.

According to another feature of the present invention, the electric motor associated with the support element is driven by a control and command unit that allows to automate the rotation of the support element of the second roll in order to perform the taping operations, setting the values of speed, possibly variable, and memorizing the parameters. The automation of the rotation of the support element is of fundamental importance for obtaining high quality joins. In fact, to obtain high quality joins the process of applying the tape must be carried out substantially continuously, and hence with a continuous oscillation movement of the second roll, without interruptions that would alter the taping conditions requested. Moreover, in one embodiment of the invention, the rotation speed of the support element is always kept functionally connected by the control and command unit with the rotation speed of the first and the second roll, so that in any angular position of the support element the rotation speeds of the two rolls are maintained always the same. In addition, the control and command unit is configured to functionally connect the speed of rotation of the first and second rolls also with the direction of rotation or oscillation of the support element, for example clockwise or anti-clockwise, in order to guarantee always the same conditions of pressure of the rolls on the tape against the edges to be joined.

In this way it is therefore possible to also obtain join lines having characteristics of impermeability that may be required for particular applications, even on very complex articles, for example gloves or suchlike, and having extremely variable paths for the application of the tape, with radiuses of curvature that change continuously and with a continuous alternation, for example of valleys and ridges, as occurs precisely along the fingers of a glove.

According to another feature of the present invention, the control and command unit is suitable to control and command the automatic drive at least of the motor members during the movement of the article by the movement unit. In particular, the control and command unit determines the continuous and commanded rotation, for example at variable speed, of the support element as a function of the condition of feed of the edges that are joined, in order to prevent the support element from forming an obstacle.

According to another feature, the control and command unit comprises memorization means suitable to memorize, during a simulation step of the taping operation, the movements to be set for the support element. In fact, before the taping and movement steps, performed respectively by the taping unit and the movement unit, a simulation is made of the taping operation of the edges, during which the control and command unit memorizes at least the rotations to be imparted to the support element as a function of the position where the rolls and taping unit are operating, and also as a function of the rotation speeds of the rolls. The control and command unit therefore self-learns the commands that are set manually by the operator, to subsequently repeat them during the actual taping steps of the article. This allows to obtain a taping operation performed substantially continuously during which the feed of the article and the rotation of the support element is determined to prevent any interference.

According to one form of embodiment of the present invention, the machine comprises a support arm configured to have at least the first segment, disposed offset with respect to the support element and with a mainly longitudinal development along an axis incident with the second axis of rotation, and a second segment suitable to connect the support element and the first segment. In this way, the support element and the support arm achieve a substantially U-shaped structure that allows a simple structural configuration suitable to make the support element rotate and to allow the taping operations at the same time.

The rotation of the support element around the second axis of rotation can therefore be determined by acting on the support arm.

In some forms of embodiment it may be provided that the support arm and the support element are made in a single body.

In other forms of embodiment of the present invention, the support element is an element that can be selectively separated from the support arm of the second roll.

According to another form of embodiment, the motor members are associated in correspondence with the free end of the first segment of the support arm, and provide to make both the support arm and the support element of the second roll rotate.

According to another feature of the invention, motor members are associated with at least one of either the first roll and the second roll, to make them selectively rotate around the respective first and/or second axis of rotation and to determine the feed of the edges during taping.

According to another form of embodiment, motorization means are associated with the second roll, suitable to make the second roll rotate around the second axis of rotation.

According to another form of embodiment, the motorization means comprise at least an electric motor with which a first pulley is associated; a belt is suitable to wind on the first pulley and in turn is suitable to transmit motion to the second roll. This configuration allows to take the motor into a non-bulky condition for the second roll, which often has to operate in restricted spaces.

According to another feature of the present invention, between the motor and the first pulley kinematic connection means are interposed, such as belts, chains, gears and transmission shafts, which allow to distance the bulky components which determine the motorization of the second roll, from the working spaces of the second roll.

According to a first variant form of embodiment, the motorization means also comprise a second pulley, coaxial and solidly associated with the second roll.

According to another variant, the belt is suitable to wind on the external circumferential surface of the second roll and defines a contrast surface for the first roll. This solution is particularly advantageous for performing operations in very restricted spaces and where a motorization is required of the second roll.

The present invention also concerns the method for taping articles with a taping machine as described above.

### BRIEF DESCRIPTION OF THE DRAWINGS

These and other characteristics of the present invention will become apparent from the following description of one form of embodiment, given as a non-restrictive example with reference to the attached drawings wherein:
- fig. 1 is a perspective view of a machine for taping articles according to the present invention;
- fig. 2 is a schematic representation of an object obtained using the machine in fig. 1;
- fig. 3 is an enlarged view of a detail of fig. 1;
- fig. 4 is a perspective view of some details of fig. 3;
- fig. 5 is a first variant of fig. 4;
- fig. 6 is a second variant of fig. 4;
- fig. 7 is a variant of a detail of fig. 6;
- figs. 8 - 14 show schematic representations of the taping method for the object in fig. 2.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME FORMS OF EMBODIMENT

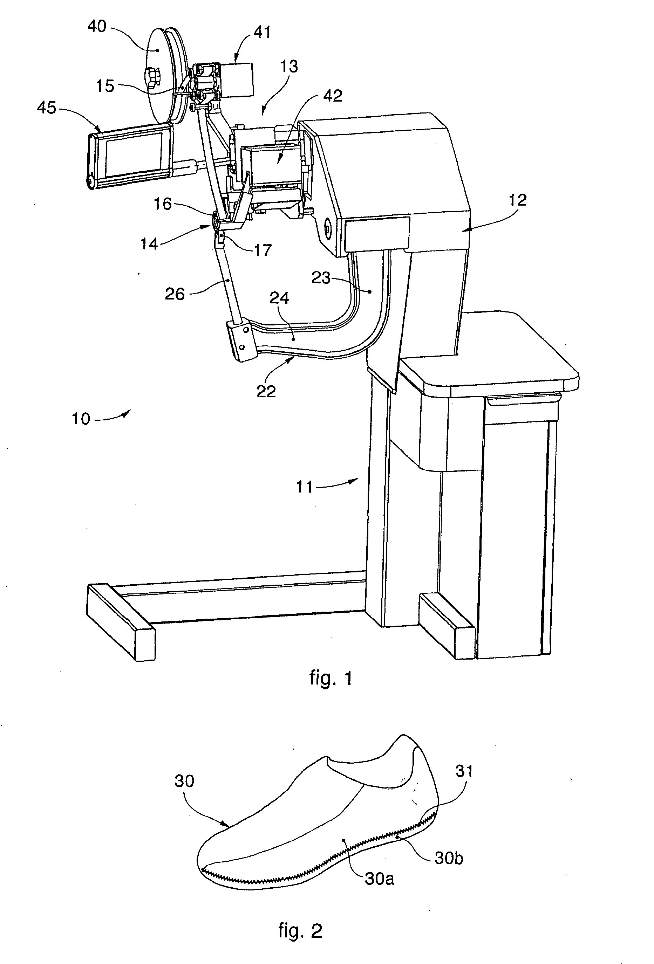

With reference to fig. 1, a machine for taping articles according to the present invention is indicated in its entirety by the reference number 10 and comprises a bearing structure 11, provided with a main body 12 to support and contain functional devices of the machine 10.

The machine 10 according to the present invention is used for taping articles such as articles of clothing and objects in general, having complex shapes, concave and/or partly closed such as for example gloves, shoes, bra cups, handbags, suitcases, helmets, hats or suchlike.

These articles can be made with layers of both natural and synthetic material, such as for example fabrics, non-woven fabrics, leather, panels of synthetic material such as nylon or other.

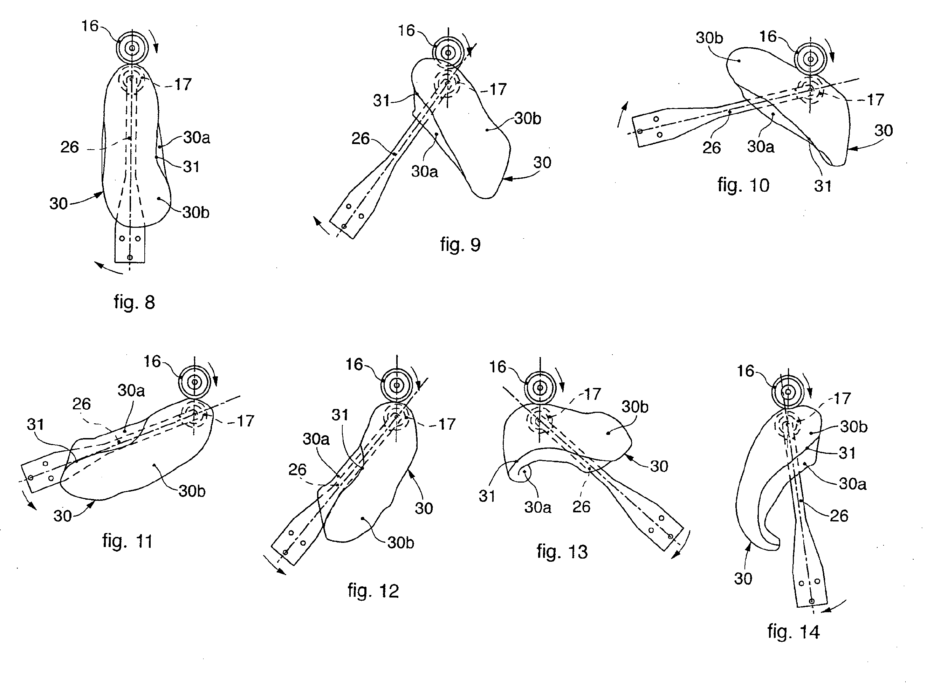

In the case shown in figs. 8-14, the machine 10 is suitable to operate on a shoe 30 (fig. 2) in order to reciprocally and solidly connect a first edge 30a and a second edge 30b, pre-assembled with respect to each other along a join line 31 made in this case by stitching. In other forms of embodiment, the join line 30 can be made by ultrasound, or other similar or comparable techniques.

In particular, a taping unit 13, which allows to apply a tape 15 on the join line 31, and a movement unit 14, which provides to feed the edges 30a and 30b in order to perform the solid join thereof, are associated with the main body 12.

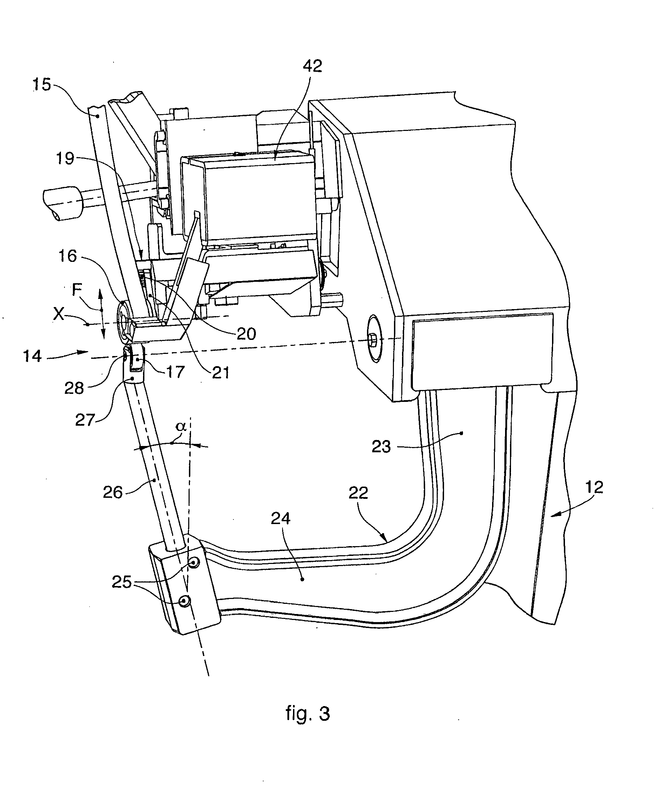

The movement unit 14 (fig. 3) comprises a first roll 16 and a second roll 17 rotatable around a first axis of rotation X and respectively a second axis of rotation Y which are disposed substantially parallel to each other.

Actuation means, not visible in the drawings, are associated with the first roll 16, and provide to translate the first roll 16 to distance it from, or bring it into contact with, the peripheral surface of the second roll 17 as indicated by arrow F in fig. 3.

Motor members 19 are also associated with the first roll 16, and provide to make the first roll 16 rotate around the first axis X to determine the feed of the edges 30a and 30b during the taping operations.

The motor members in this case comprise an electric motor, not visible in the drawings, suitable to make rotate a first toothed pulley 20 on which a toothed belt 21 winds. The toothed belt 21 in turn winds on a second pulley, coaxial and solid with the first roll 16 to make the latter rotate.

A support arm 22 is associated with the main body 12 of the machine 10, is substantially L-shaped, that is, it comprises a first segment 23 that extends substantially orthogonal with respect to the axes of rotation X and Y, and a second segment 24 that extends substantially parallel with respect to the axes of rotation X and Y, and is disposed, during use, under the first 16 and second roll 17.

In correspondence with the free end of the second segment 24, a support element 26 is associated by means of connection means 25 of the removable type. The connection means 25 can be for example screws, pins, bolts or other.

The support element 26, substantially oblong in shape, has a terminal end 27 shaped like a fork which allows to support and pivot the second roll 17 by means of a pin 28.

The support element 26 has an axis of longitudinal development which is disposed incident with respect to the first X and second axis of rotation Y.

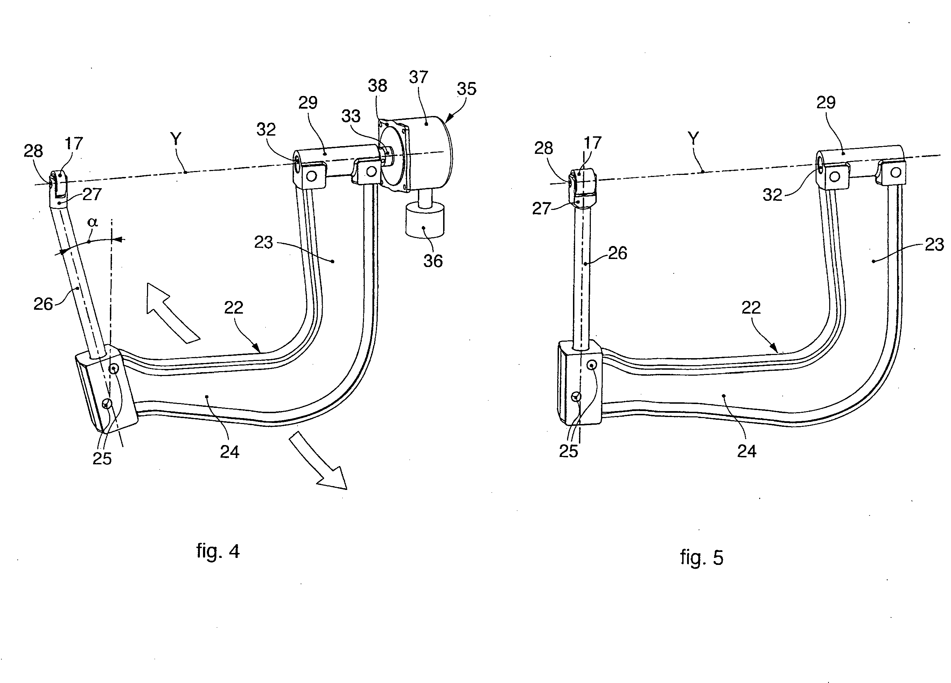

The terminal end 27 of the support element 26 can be made solid with the latter, or it can be a selectively separable element to allow the second roll 17 to be replaced by other rolls of different sizes, for example having different lengths as shown in figs. 4 and 5.

The second roll 17 in this case is mounted idle on the terminal end 27, and the feed of the edges 30a, 30b during working is determined by the first roll 16.

The support arm 22 is selectively rotatable around an axis of rotation that is substantially coinciding with the second axis of rotation Y of the second roll 17.

The support arm 22 can be made to rotate by an angle of rotation of at least 180°.

In particular (fig. 4), the first segment 23 of the support arm 22, in correspondence with its free end, is provided with a pivoting tube 29 having an insertion seating 32.

A rotation shaft 33 of motor members 35 is keyed into the insertion seating 32.

The motor members 35 in this case comprise an electric motor 36 and a reduction unit 37 that reduces the speed of rotation of the electric motor 36, and which is provided with the rotation shaft 33.

The motor members 35 are contained inside the main body 12 and are solidly associated with it by means of an attachment plate 38.

The support element 26 of the second roll 17 can be associated to the second segment 24 substantially orthogonal to it (fig. 5), or angled by a determinate angle α with respect to the vertical direction and facing toward the outside (fig. 4).

In some forms of embodiment of the invention, the angle α has an amplitude comprised between 2° and 45°.

Using one or another type of support element 26 depends on the type and complexity of the article that has to be taped. The connection means 25 allow to replace the support element 26 depending on the types used.

In some forms of embodiment of the present invention, not shown in the drawings, it may be provided that the support element 26 is selectively angled with respect to the second segment 24 of the support arm 22. In this case, suitable mechanisms are provided that allow to vary the configuration assumed by the support arm 22 which keep the second axis of rotation Y of the second roll 17 parallel to that of the first roll 16, and which allow reciprocal contact between the first roll 16 and the second roll 17.

In other forms of embodiment, it may be provided that the mechanisms are associated with motorized members to be selectively and automatically actuated.

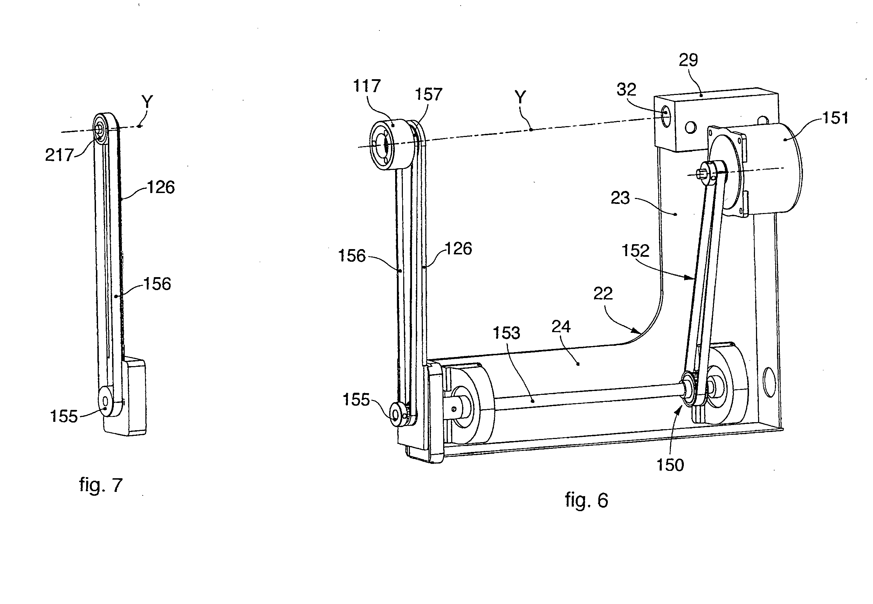

In another form of embodiment (fig. 6), the second roll is indicated by the reference number 117 and is selectively motorizable by motorization means 150.

The motorization means 150 in this case comprise an electric motor 151 which is disposed in correspondence with the first segment 23 of the support arm 22.

The electric motor 151, by means of kinematic connection means 152, in this case belt type connections, transmits motion to a transmission shaft 153 which is disposed in correspondence with the second segment 24 of the support arm 22.

At one end of the transmission shaft 153 a first pulley 155 is keyed, on which a belt 156 winds.

The belt 156 in turn winds in correspondence with a second pulley 157 which is mounted in correspondence with the free end of the support element, indicated in fig. 6 by the reference number 126.

The second roll 117 is mounted coaxial and solid with the second pulley 157. In this way, by driving the electric motor 151 it is possible to make the second roll 117 rotate at predetermined speeds of rotation and as a function of the particular requirements of the application.

In this case too, the second roll 117 can be replaced by other rolls of different sizes, for example having different lengths.

According to another form of embodiment (fig. 7), and for applications where the working spaces are very restricted, merely by way of example, for gloves, the second roll is indicated by the reference number 217.

In this case, instead of winding on a second pulley as described with reference to fig. 6, the belt 156 winds directly on the external circumferential surface of the second roll 217 and therefore makes it rotate. The belt 156 therefore defines during use the contrast surface against which the first roll 16 is pressed, and also allows the edges 30a, 30b to advance so they can be joined.

The two forms of embodiment described with reference to figs. 6 and 7 can be interchangeable depending on the particular operating requirements, by replacing the support element 126 by the support arm 22.

The taping unit 13 in this case comprises a feed reel 40 to feed the tape 15, a programmed tensioning device 41 to tension the tape 15, and heating devices 42 to heat the tape 15.

The tape 15 can be fed without adhesive, and in this case a device to transfer the adhesive onto the tape 15 is provided, of a known type, for example from the patent application EP-A-1.749.658 in the name of the present Applicant. Otherwise, the tape 15 can be purchased and supplied with the adhesive already on it, according to requirements.

The tensioning device 41 is the substantially known type and its function is to determine a tension of the tape 15 that is independent of the tension it possesses downstream of the tensioning device 41 itself. This allows to prevent lack of uniformity and anomalies in the tension that can derive from the feed of the tape 15 or the operation of transferring the adhesive, and allows to obtain, during the processing, possible recesses, curls and variations. The effect is to keep the tape 15 stretched normally with a tension of a few grams and, when required, to supply a desired tension in the position and for the desired length.

The heating device 42, also of the substantially known type, generates a jet of hot air in correspondence with the join zone and with the tape 15, which confers adhesiveness to the latter to allow the taping of the two edges 30a and 30b.

The heating device 42 can be, for example, of the type described in the patent application IT-MI2011A001159 in the name of the present Applicant. The heating device 42 can also be suitable to perform cauterizing operations on the edges 30a, 30b that have to be joined.

In correspondence with the first roll 16 there can be devices to guide the tape 15, also of a known type, to allow it to be correctly positioned and aligned with respect to the first roll 16.

A control and command unit 45 controls and commands the drive of the electric motors of the motor members 19, the motor members 35 and the motorization means 150, respectively to drive the first roll 16, the support arm 22 and the second roll 17.

It is advantageous to provide that the control and command unit 45 is suitable to command the synchronized drive of the electric motors to substantially continuously perform the taping operation of the edges 30a, 30b to be joined.

The commands to be given to the electric motors can be introduced into the control and command unit 45 by means of a list of commands set by the operator, or it may be provided that, during a first self-learning operation, the taping operation that has to be made on the edges 30a, 30b is simulated and therefore the drive of the individual electric motors is commanded directly in manual mode, or selectively controlled. During these drives, the control and command unit 45 memorizes the sequence of movements that have been imparted and makes the movements substantially continuous.

More particularly, the speeds of rotation of the first roll 16 and the second roll 17 are influenced, by means of the control and command unit 45, by the speed of rotation of the support arm 22 and by the fact that the direction of rotation of the support arm 22 is positive or negative, i.e. clockwise or anti-clockwise. In fact, it is quite important to maintain a relationship between all the speeds of rotation, and between the speeds of rotation of the rolls 16 and 17 and the direction of rotation of the support arm 22, to guarantee that the pressure of the rolls 16 and 17 against the tape are maintained constant and that the peripheral speeds of the rolls 16 and 17 remain those set by the control and command unit 45.

The continuity of the taping operations is indispensable in order to obtain a taping with a high quality join and an impermeable seal.

The possibility of rotating the support arm 22 around the second axis of rotation Y allows to make the latter non-interfering with the movements of the article to be taped.

With reference to figs. 8 - 14, a sequence of positions is shown, assumed instantaneously by the support arm 22 to perform the taping operations on the shoe 30 in fig. 2.

In particular (fig. 8), the support arm 22 is disposed substantially vertical and the shoe 30, pre-assembled by stitching and that is to be taped, is positioned with its heel between the first 16 and second roll 17. The shoe 30 is positioned between the rolls 16, 17 so that its join line 31 is centered with the position of the tape 15 that is applied.

Subsequently (fig. 9), the control and command unit 45 drives the first roll 16, in this case in a clock-wise direction to determine the advance of the shoe 30, and makes the support arm 22 rotate, also in a clock-wise direction, to make it non-interfering with the operations performed. The operator guides the advance of the shoe 30 to keep the tape 15 applied centered with respect to the join line 31.

Afterward, the first roll 16 is made to rotate, again in a clock-wise direction, until the taping of the join line 31 is completed, while the rotation of the support arm 22 is determined as a function of the conditions of accessibility and non-interference of the shoe 30 as shown in figs. 10-14.

It is clear that modifications and/or additions of parts may be made to the taping machine and corresponding taping method as described heretofore, without departing from the field and scope of the present invention.

For example, in some forms of embodiment, not shown in the drawings, selective clamping means to clamp the position assumed by the support arm 22 can be associated with said arm 22, to allow to use the machine also with a fixed support element 26 of the roll. The clamping means can be the mechanical, electromechanical or magnetic type.

It is also clear that, although the present invention has been described with reference to some specific examples, a person of skill in the art shall certainly be able to achieve many other equivalent forms of taping machine and corresponding taping method, having the characteristics as set forth in the claims and hence all coming within the field of protection defined thereby.

## Claims

1. Machine to tape articles (30), also having a complex shape, along edges (30a, 30b) of layers of material already temporarily joined together along a join line (31), comprising a taping unit (13) suitable to apply a tape (15) in correspondence to said join line (31), and at least a movement unit (14) to determine the feed of said edges (30a, 30b) and comprising a first roll (16) having a first axis of rotation (X) and at least a second roll (17, 117, 217) having a second axis of rotation (Y) substantially parallel to said first axis of rotation (X), said first roll (16) and said second roll (17, 117, 217) defining in use a passage gap for said edges (30a, 30b), wherein said second roll (17, 117, 217) is mounted on a support element (26) configured to rotate around an axis of rotation substantially coinciding with said second axis of rotation (Y), **characterized in that** said support element (26) is associated with an electric motor mean (35, 36, 37) able to allow a substantially continuous rotation thereof at a variable speed.

2. Machine as in claim 1, **characterized in that** said support element (26) has an oblong shape and has one end (27) configured to support the second roll (17, 117, 217).

3. Machine as in claim 1 or 2, **characterized in that** it also comprises a control and command unit (45) suitable to control and command the automatic drive of at least said electric motor mean (35), according to any angle and stoppable in any position, at least during the movement of said edges (30a, 30b) by said movement unit (14).

4. Machine as in claim 3, **characterized in that** said control and command unit (45) comprises memory means suitable to memorize, during a simulation step of the taping operation of said edges (30a, 30b), the movements to be imparted to said support element (26).

5. Machine as in any claim hereinbefore, **characterized in that** it comprises a support arm (22) configured to have at least a first segment (23) disposed offset with respect to said support element (26) and having a mainly longitudinal development along an axis incident to said second axis of rotation (Y), and a second segment (24) suitable to connect said support element (26) and said first segment (23).

6. Machine as in claim 5, **characterized in that** said support element (26) and said support arm (22) achieve a substantially U-shaped structure able to make said support element (26) rotate.

7. Machine as in claim 5 or 6, **characterized in that** said motor members (35) are associated in correspondence to the free end of said first segment (23) of the support arm (22).

8. Machine as in any claim hereinbefore, **characterized in that** motor members (19, 150) are associated to at least one of either said first roll (16) or said second roll (17, 117, 217) in order to make them selectively rotate around the respective first (X) and/or second (Y) axis of rotation and to determine the feed of said edges (30a, 30b)

9. Machine as in any claim hereinbefore, **characterized in that** motorization means (150) are associated to said second roll (117; 217) and are suitable to make said second roll (117; 217) rotate around said second axis of rotation (Y).

10. Machine as in claim 9, **characterized in that** said motorization means (150) comprise at least a motor (151) to which a first pulley (155) is associated, a belt (156) being suitable to wind on said first pulley (155) and in turn being suitable to transmit the motion to said second roll (117, 217).

11. Machine as in claim 10, **characterized in that** kinematic connection means (152) are interposed between said motor (151) and said first pulley (155).

12. Machine as in claim 10 or 11, **characterized in that** said motorization means (150) also comprise a second pulley (157) coaxial and solidly associated to said second roll (117).

13. Machine as in claim 10, **characterized in that** said belt (156) is suitable to wind on the external circumferential surface of said second roll (217) and defines a contrast surface for said first roll (16).

14. Machine as in any claim hereinbefore, **characterized in that** said support element (26; 126) extends substantially orthogonal with respect to said second axis of rotation (Y).

15. Machine as in any claim from 1 to 13, **characterized in that** said support element (26; 126) is inclined with respect to the vertical direction by a determinate angle α comprised between 2° and 45°.

16. Method to tape articles (30) also having a complex shape along edges (30a, 30b) of layers of material already temporarily joined together along a join line (31), comprising at least a step of taping said edges (30a, 30b) by applying a tape (15) in correspondence to said join line (31), and a simultaneous movement step during which said edges (30a, 30b) are made to advance between a first rotating roll (16) and a second roll (17, 117, 217) having respectively a first axis of rotation (X) and a second axis of rotation (Y) disposed substantially parallel to each other, wherein at least during said taping step and said movement step a step is provided of rotating a support element (26) around an axis of rotation substantially coinciding with said second axis of rotation (Y), said support element (26) being suitable to support said second roll (17, 117, 217), **characterized in that** said rotation of the support element (26) is substantially continuous and is achieved by means of an electric motor (35, 36, 37) commanded at a variable speed, and wherein at least the speed of rotation of the support element (26) and the speed of rotation of the first roll (169 are functionally connected each other..

17. Method as in claim 16, **characterized in that** during said rotation step said support element (26) is selectively made to rotate around said second axis of rotation (Y).

18. Method as in claim 17, **characterized in that** during said rotation step a control and command step is provided during which a control and command unit (45) commands and controls the automatic drive at least of said motor members (35).

19. Method as in claim 18, **characterized in that** before said taping, movement and rotation steps, a simulation step is provided to simulate the taping operation of said edges (30a, 30b), during which said control and command unit (45) memorizes the rotations to be imparted to said support element (26) at least as a function of the feed of said edges (30a, 30b).

## Patentansprüche

1. Maschine zum Bandaufbringen auf Artikel (30), auch mit einer komplexer Form, entlang von Kanten (30a, 30b) von Materiallagen, welche bereits entlang einer Verbindungslinie (31) temporär miteinander verbunden sind,
umfassend
eine Bandaufbringeinheit (13), welche dazu geeignet ist, ein Band (15) korrespondierend zu der Verbindungslinie (31) aufzutragen, und
zumindest eine Bewegungseinheit (14) zum Bestimmen des Vorschubs der Kanten (30a, 30b), und
umfassend
eine erste Rolle (16) mit einer ersten Rotationsachse (X) und zumindest eine zweite Rolle (17, 117, 217) mit einer zu der ersten Rotationsachse (X) im Wesentlichen parallelen zweiten Rotationsachse (Y),
wobei die erste Rolle (16) und die zweite Rolle (17, 117,217) im Gebrauch einen Durchgangsspalt für die Kanten (30a, 30b) definieren,
wobei die zweite Rolle (17, 117, 217) auf ein Stützelement (26) montiert ist,
welches dazu konfiguriert ist, um sich um eine Rotationsachse zu drehen, welche im Wesentlichen mit der zweiten Rotationsachse (Y) übereinstimmet,
**dadurch gekennzeichnet, dass**
das Stützelement (26) mit einem Elektromotorenmittel (35, 36, 37) verbunden ist,
welches dazu in der Lage ist, eine im Wesentlichen kontinuierliche Rotation desselben mit einer variablen Geschwindigkeit zu ermöglichen.

2. Maschine gemäß Anspruch 1, **dadurch gekennzeichnet, dass** das Stützelement (26) eine längliche Form hat und ein Ende (27) dazu konfiguriert ist, die zweite Rolle (17, 117, 217) zu tragen.

3. Maschine gemäß Anspruch 1 oder 2, **dadurch gekennzeichnet, dass** sie ferner eine Kontroll- und Steuereinheit (45) aufweist, welche geeignet ist, den automatischen Antrieb zumindest des einen Elektromotorenmittels (35), entsprechend jedes Winkels und anhaltbar in jeder Position, zumindest während der Bewegung der Kanten (30a, 30b) durch die Bewegungseinheit (14) zu kontrollieren und zu steuern.

4. Maschine gemäß Anspruch 3, **dadurch gekennzeichnet, dass** die Kontroll- und Steuereinheit (45) Speichermittel aufweist, welche geeignet sind, während eines Simulationsschritts des Vorgangs des Bandaufbringens auf die Kanten (30a, 30b) die Bewegungen, welche dem Stützelement (26) zu übermitteln sind, zu speichern.

5. Maschine gemäß einem der vorstehenden Ansprüche, **dadurch gekennzeichnet, dass** sie einen Stützarm (22) aufweist, welcher konfiguriert ist,
zumindest ein erstes Segment (23) aufzuweisen,
welches
versetzt zu dem Stützelement (26) angeordnet ist und
eine vorwiegend longitudinale Erstreckung entlang einer Achse, welche die zweite Rotationsachse (Y) schneidet, aufweist, und
ein zweites Segment (24) aufzuweisen, welches geeignet ist, das Stützelement (26) und das erste Segment (23) zu verbinden.

6. Maschine gemäß Anspruch 5, **dadurch gekennzeichnet, dass** das Stützelement (26) und der Stützarm (22) eine im Wesentlichen U-förmige Struktur bereitstellen, welche es ermöglicht, das Stützelement (26) zu drehen.

7. Maschine gemäß Anspruch 5 oder 6, **dadurch gekennzeichnet, dass** die Motorenteile (35) korrespondierend zu dem freien Ende des ersten Segments (23) des Stützarms (22) verbunden sind.

8. Maschine gemäß einem der vorstehenden Ansprüche, **dadurch gekennzeichnet, dass** Motorenteile (19, 150) mit zumindest einer der entweder ersten Rolle (16) oder der zweiten Rolle (17, 117, 217) verbunden sind, um diese selektiv um die entsprechende erste (X) und/oder zweite (Y) Rotationsache zu drehen und den Vorschub der Kanten (30a, 30b) zu bestimmen.

9. Maschine gemäß einem der vorstehenden Ansprüche, **dadurch gekennzeichnet, dass** Motorisierungsmittel (150) mit der zweiten Rolle (117, 217) verbunden sind und dazu geeignet sind, die zweite Rolle (117, 217) um die zweite Rotationsachse (Y) zu drehen.

10. Maschine gemäß Anspruch 9, **dadurch gekennzeichnet, dass** die Motorisierungsmittel (150)
zumindest einen Motor (151) aufweisen, an welchem eine erste Riemenscheibe (155) angeordnet ist,
sowie einen Riemen (156), welcher geeignet ist, an der ersten Riemenscheibe (155) abzurollen, und wiederum geeignet ist, die Bewegung auf die zweite Rolle (117, 217) zu übertragen.

11. Maschine gemäß Anspruch 10, **dadurch gekennzeichnet, dass** kinematische Verbindungsmittel (152)
zwischen dem Motor (151) und der ersten Riemenscheibe (155) zwischengeschalten sind.

12. Maschine gemäß Anspruch 10 oder 11, **dadurch gekennzeichnet, dass** die Motorisierungsmittel (150) ferner eine zweite Riemenscheibe (157) aufweisen,
welche koaxial und fest mit der zweiten Rolle (117) verbunden ist.

13. Maschine gemäß Anspruch 10, **dadurch gekennzeichnet, dass** der Riemen (156) geeignet ist,
auf der äußeren Umfangsoberfläche der zweiten Rolle (217) abzurollen und eine Gegenfläche für die erste Rolle (16) definiert.

14. Maschine gemäß einem der vorstehenden Ansprüche, **dadurch gekennzeichnet, dass** das Stützelement (26, 126) sich im Wesentlichen orthogonal in Bezug auf die zweite Rotationsachse (Y) erstreckt.

15. Maschine gemäß einem der Ansprüche 1 bis 13, **dadurch gekennzeichnet, dass** das Stützelement (26, 126) in Bezug auf die vertikale Richtung um einen festgelegten Winkel α zwischen 2° und 45° geneigt ist.

16. Verfahren zum Bandaufbringen auf Artikel (30), auch mit einer komplexer Form, entlang von Kanten (30a, 30b) von Materiallagen, welche bereits entlang einer Verbindungslinie (31) temporär miteinander verbunden sind,
umfassend
zumindest einen Schritt des Bandaufbringens auf die Kanten (30a, 30b) durch Aufbringen eines Bandes (15) korrespondierend zu der Verbindungslinie (31), und
einen zeitgleichen Bewegungsschritt, während welchem die Kanten (30a, 30b) zwischen
einer ersten rotierenden Rolle (16) und einer zweiten Rolle (17, 117, 217), mit entsprechend einer ersten Rotationsachse (X) und einer zweiten Rotationsachse (Y), welche im Wesentlichen parallel zueinander angeordnet sind,
befördert werden,
wobei zumindest während des Schritts des Bandaufbringens und des Bewegungsschritts ein Schritt zum Drehen eines Stützelements (26) um eine Rotationsachse, welche im Wesentlichen mit der zweiten Rotationsachse (Y) übereinstimmt, durchgeführt wird,
wobei das Stützelement (26) geeignet ist, die zweite Rolle (17, 117, 217) zu tragen,
**dadurch gekennzeichnet, dass**
das Drehen des Stützelements (26)
im Wesentlichen kontinuierlich ist und
durch einen Elektromotor (35, 36, 37) erzielt ist, welcher bei variabler Geschwindigkeit gesteuert wird,
und wobei zumindest die Rotationsgeschwindigkeit des Stützelements (26) und der Rotationsgeschwindigkeit der ersten Rolle (169) funktional miteinander zusammenhängen.

17. Verfahren gemäß Anspruch 16, **dadurch gekennzeichnet, dass** während des Schritts des Drehens das Stützelement (26) selektiv um die zweite Rotationsachse (Y) rotiert wird.

18. Verfahren gemäß Anspruch 17, **dadurch gekennzeichnet, dass** während des Schritts des Drehens
ein Kontroll- und Steuerschritt durchgeführt wird,
während welchem eine Kontroll- und Steuereinheit (45) den automatischen Antrieb zumindest der Motorenteile (35) steuert und kontrolliert.

19. Verfahren gemäß Anspruch 18, **dadurch gekennzeichnet, dass** vor dem Schritt des Bandaufbringens, des Bewegungsschritts und des Rotationsschritts,
ein Simulationsschritt durchgeführt wird,
um den Vorgang des Bandaufbringens auf die Kanten (30a, 30b) zu simulieren, während welchem
die Kontroll- und Steuereinheit (45) die Bewegungen,
welche dem Stützelement (26) zu übermitteln sind,
zumindest als eine Funktion des Vorschubs der Kanten (30a, 30b) speichert.

## Revendications

1. Machine pour enrubanner des articles (30), ayant également une forme complexe, le long des bords (30a, 30b) de couches de matériau déjà reliés ensemble temporairement le long d'une ligne de jonction (31), comprenant une unité d'enrubannage (13) adaptée pour appliquer une bande (15) en correspondance avec ladite ligne de jonction (31), et au moins une unité de déplacement (14) pour déterminer la charge desdits bords (30a, 30b) et comprenant un premier rouleau (16) ayant un premier axe de rotation (X) et au moins un deuxième rouleau (17, 117, 217) ayant un second axe de rotation (Y) sensiblement parallèle audit premier axe de rotation (X), ledit premier rouleau (16) et ledit deuxième rouleau (17, 117, 217) définissant en cours d'utilisation une fente de passage pour lesdits bords (30a, 30b), dans laquelle ledit deuxième rouleau (17, 117, 217) est monté sur un élément de support (26) configuré pour tourner autour d'un axe de rotation coïncidant sensiblement avec ledit deuxième axe de rotation (Y), **caractérisée en ce que** ledit élément de support (26) est associé à un moyen de moteur électrique (35, 36, 37) pouvant permettre une rotation sensiblement continue de celui-ci à une vitesse variable.

2. Machine selon la revendication 1, **caractérisée en ce que** ledit élément de support (26) présente une forme oblongue et comporte une extrémité (27) configurée pour supporter le second rouleau (17, 117, 217).

3. Machine selon la revendication 1 ou 2, **caractérisée en ce qu'**elle comprend en outre une unité de contrôle et de commande (45) apte à contrôler et commander le lecteur automatique d'au moins ledit moyen de moteur électrique (35), selon n'importe quel angle et pouvant être arrêtée dans une position quelconque , au moins pendant le déplacement desdits bords (30a, 30b) par ladite unité de déplacement (14).

4. Machine selon la revendication 3, **caractérisée en ce que** ladite unité de contrôle et de commande (45) comprend des moyens de mémoire aptes à mémoriser, lors d'une étape de simulation de l'opération d'enrubannage desdits bords (30a, 30b), les mouvements devant être communiqués audit élément de support (26).

5. Machine selon l'une quelconque des revendications précédentes, **caractérisée en ce qu'**elle comprend un bras de support (22) configuré pour avoir au moins un premier segment (23) disposé en décalage par rapport audit élément de support (26) et ayant un développement principalement longitudinal le long d'un axe incident sur ledit second axe de rotation (Y), et un second segment (24) adapté pour connecter ledit élément de support (26) et ledit premier segment (23).

6. Machine selon la revendication 5, **caractérisée en ce que** ledit élément de support (26) et ledit bras de support (22) forment une structure sensiblement en forme de U capable de faire tourner ledit élément de support (26).

7. Machine selon la revendication 5 ou 6, **caractérisée en ce que** lesdits éléments de moteur (35) sont associés en correspondance avec l'extrémité libre dudit premier segment (23) du bras de support (22).

8. Machine selon l'une quelconque des revendications précédentes, **caractérisée en ce que** des éléments moteurs (19, 150) sont associés à au moins l'un dudit premier rouleau (16) ou dudit deuxième rouleau (17, 117, 217) afin de les faire tourner de manière sélective autour du premier (X) et/ou deuxième (Y) axe de rotation respectif et pour déterminer la charge desdits bords (30a, 30b)

9. Machine selon l'une quelconque des revendications précédentes, **caractérisée en ce que** des moyens de motorisation (150) sont associés audit second rouleau (117 ; 217) et sont adaptés pour amener ledit second rouleau (117; 217) à tourner autour dudit second axe de rotation (Y).

10. Machine selon la revendication 9, **caractérisée en ce que** lesdits moyens de motorisation (150) comprennent au moins un moteur (151) à laquelle une première poulie (155) est associée, une courroie (156) étant apte à s'enrouler sur ladite première poulie (155) et à son tour étant apte à transmettre le mouvement audit second rouleau (117, 217).

11. Machine selon la revendication 10, **caractérisée en ce que** des moyens de liaison cinématiques (152) sont interposés entre ledit moteur (151) et ladite première poulie (155).

12. Machine selon la revendication 10 ou 11, **caractérisée en ce que** lesdits moyens de motorisation (150) comprennent en outre une seconde poulie (157) coaxiale et solidement associée audit second rouleau (117).

13. Machine selon la revendication 10, **caractérisée en ce que** ladite courroie (156) est apte à s'enrouler sur la surface circonférentielle extérieure dudit deuxième rouleau (217) et définit une surface de contraste pour ledit premier rouleau (16).

14. Machine selon l'une quelconque des revendications précédentes, **caractérisée en ce que** ledit élément de support (26 ; 126) s'étend sensiblement orthogonalement par rapport audit deuxième axe de rotation (Y).

15. Machine selon l'une quelconque des revendications 1 à 13, **caractérisée en ce que** ledit élément de support (26; 126) est incliné par rapport à la direction verticale d'un angle déterminé α compris entre 2° et 45°.

16. Procédé pour enrubanner des articles (30) ayant également une forme complexe le long de bords (30a, 30b) de couches de matériau déjà reliés ensemble temporairement le long d'une ligne de jonction (31), comprenant au moins une étape d'enrubannage desdits bords (30a, 30b) en appliquant une bande (15) en correspondance avec ladite ligne de jonction (31), et une étape de déplacement simultané au cours de laquelle lesdits bords (30a, 30b) sont réalisés à l'avance entre un premier rouleau rotatif (16) et un second rouleau (17, 117 , 217) ayant respectivement un premier axe de rotation (X) et un deuxième axe de rotation (Y) disposés sensiblement parallèlement les uns aux autres, dans lequel au moins pendant ladite étape d'enrubannage et ladite étape de déplacement, une étape est prévue consistant à faire tourner un support élément (26) autour d'un axe de rotation coïncidant sensiblement avec ledit second axe de rotation (Y), ledit élément de support (26) étant apte à supporter ledit deuxième rouleau (17, 117, 217), **caractérisé en ce que** ladite rotation de l'élément de support (26) est sensiblement continue et s'effectue au moyen d'un moteur électrique (35, 36, 37) commandé à une vitesse variable, et dans lequel au moins la vitesse de rotation de l'élément de support (26) et la vitesse de rotation du premier rouleau (169) sont fonctionnellement reliées l'une à l'autre.

17. Procédé selon la revendication 16, **caractérisé en ce que** pendant ladite étape de rotation, ledit élément de support (26) est sélectivement mis en rotation autour dudit second axe de rotation (Y).

18. Procédé selon la revendication 17, **caractérisé en ce que** pendant ladite étape de rotation, une étape de contrôle et de commande est prévue au cours de laquelle une unité de contrôle et de commande (45) commande et contrôle le lecteur automatique au moins desdits éléments de moteur (35).

19. Procédé selon la revendication 18, **caractérisé en ce que** avant lesdites étapes d'enrubannage, de déplacement et de rotation, une étape de simulation est prévue pour simuler l'opération d'enrubannage desdits bords (30a, 30b), pendant laquelle ladite unité de commande et de contrôle (45) mémorise les rotations à communiquer audit élément de support (26) au moins en fonction de la charge desdits bords (30a, 30b).
